# EUROPÄISCHE PATENTANMELDUNG

(11) **EP 2 893 855 A1**
(43) Veröffentlichungstag der Anmeldung: **15.07.2015**
(21) Anmeldenummer: 14151200.4
(22) Anmeldetag: 14.01.2014
(51) Int. Cl.: A47J 31/36, A47J 31/46

(54) **Extraktionsvorrichtung**

(71) Anmelder: bendis SWISS GmbH, 3421 Lyssach (CH)
(72) Erfinder: Moser, Jürg, 3421 Lyssach (CH)

(57) **Zusammenfassung**

Vorrichtung zur Extraktion mit einem flüssigen Extraktionsmittels, umfassend mindestens eine in hydraulischer Verbindung stehenden Einheit aus einer Pumpe, einem Temperiersystem für das Extraktionsmittel, einem Dreiwegeventil, und einer Extraktionsvorrichtung; wobei die Extraktionsvorrichtung einen Extraktionskopf, ein mit dem Extraktionskopf verbundenes Einlasssieb, ein Auslasssieb, und eine zwischen den beiden Sieben befindliche, zur Aufnahme Extraktionsguts geeignete Extraktionskammer aufweist; und wobei das Dreiwegeventil einen vom Temperiersystem kommenden Einlass, einen in die Extraktionskammer weisenden Auslass, und einen nicht in die Extraktionskammer, von dem Extraktionskopf hinweg weisenden Auslass aufweist; und wobei die Vorrichtung einen zur Messung der Temperatur des in die Extraktionsvorrichtung fließenden Extraktionsmittels geeigneten Temperatursensor aufweist und dass der Extraktionskopf sowohl ganz oder teilweise den Ventilsitz als auch ganz oder teilweise das Ventilgehäuse des Dreiwegeventils bildet; deren Verwendung sowie ein Verfahren zu deren Anwendung.

## Beschreibung

Die vorliegende Erfindung betrifft eine Vorrichtung zur Extraktion mittels eines flüssigen Extraktion mittels, deren Verwendung sowie ein Verfahren zu deren Anwendung. Die Extraktion unter Verwendung eines flüssigen Extraktionsmittels ist hinlänglich bekannt. Sie spielt eine wesentliche Rolle bei der Gewinnung von Extrakten für den pharmazeutischen Bereich und oder auch für den Bereich des täglichen Lebens, zum Beispiel bei der Herstellung von Kaffee und oder Tee.

Es ist bekannt, beispielsweise gemahlenen Kaffee unter Verwendung von heißem Wasser zu extrahieren. Bei diesem Verfahren werden lösliche oder extrahierbare feste oder flüssige Stoffe aus dem Kaffeemehl gelöst. Um feste Stoffe nicht in den Extrakt gelangen zu lassen, werden verschiedene Siebe zumeist aus Filterpapier oder aus Edelstahl, verwendet.

In jüngster Zeit haben sich die Qualitätsanforderungen an Kaffee oder Tee immer mehr erhöht. Eine wesentliche Bedeutung hierbei hat die Temperaturkonstanz des als Extraktionsmittels verwendeten Wassers. Dabei muss zwischen zwei grundsätzlich verschiedenen Verfahren unterschieden werden: Zum Einen wird während der gesamten Extraktion Wasser mit einer konstanten Temperatur verwendet - beim Kaffee sollte diese Temperatur beispielsweise zwischen 88 und 92 °C liegen. Zum Anderen wird während der Extraktion, die zwischen 20 und 50 s je nach Art des zu extrahieren Kaffees liegt, eine so genannte Temperaturkurve verwendet. Das bedeutet, dass die Temperatur in Abhängigkeit von der Zeit möglichst genau zu regeln ist.

Ein weiteres Problem ist die Temperaturbeständigkeit so genannten "first shots". Das bedeutet, dass die Kaffee oder Espressomaschine nach längerem Stillstand einen Espresso, d.h. ein Kaffeegetränk mit maximal 35 ml an Extrakt, bereitstellen muss, der eine Temperatur von deutlich mehr als 80 °C in der Tasse aufweisen sollte. Viele Kaffee oder Espressomaschinen verwenden Brühgruppen, die eine erhebliche Trägheit in thermischer Hinsicht aufweisen. Da die meisten Brühgruppen elektrisch beheizt werden, ist der erste, aus einer herkömmlichen Espressomaschine hergestellte Espresso meistens deutlich zu kalt.

Ein weiteres Problem ist der sogenannte "overshot" der Leistungsregelung der Heizung. Das bedeutet dass der Brühgruppe zu viel thermische Energie zugeführt wird, so dass die Temperatur des Wassers über den gewünschten Bereich hinausschießt. Ein solches Verhalten führt zu einem Verbrennen des Kaffees, der an einem unangenehmen, bitterem Geschmack schnell zu erkennen ist.

Angesichts dieser Probleme hat es in der jüngsten Vergangenheit eine Vielzahl von Entwicklungen hinsichtlich der verwendeten Brühgruppen gegeben, mit denen versucht wurde, diese Probleme insgesamt zu lösen:

So wurde ca. 1970 von der Firma La Marzocco die sogenannte "grupo saturo" auf den Markt gebracht, die im Deutschen unter dem Begriff "gesättigte Brühgruppe" bekannt ist. Es handelt sich hierbei um eine Brühgruppe (= Extraktionsvorrichtung), bei der die Brühgruppe und der Brühkessel eine Einheit bilden, wobei die Brühgruppe zugleich die höchste und wärmste Stelle des Kessels ist. Das heiße Wasser wird über eine dünne Leitung im mittleren Teil des Kessels abgenommen und über ein außenliegendes Ventil nach außen geführt und gesteuert. Anschließend wird das heiße Wasser wieder über eine so genannte "Dusche" in den Brühkopf geführt und auf das Kaffeemehl gegeben.

Bei einer späteren Verbesserung wurde das Magnetventil direkt auf dem Brühkopf montiert, so dass die Heißwasserentnahme direkt an der höchsten und wärmsten Stelle des Brühkopfes (= Extraktionskopf) erfolgt.

Eine weitere Verbesserung wurde 1993 von Kees van der Westen vorgenommen. Dabei wurde das System von La Marzocco dahingehend verändert, dass die Beheizung des Brühkessels über einen Wärmetauscher erfolgt und die Verbindung von Brühboiler zu Brühkopf so ausgebildet ist, dass der höchste Punkt des Boilers eben diese Verbindung ist.

2001 brachte die Firma Dalla Corte eine Brühgruppe auf den Markt, bei dem die Brühgruppe und der Brühkessel in einem Bauteil zusammengefasst sind. Der Brühkopf ist dabei an der Unterseite des Bauteils angebracht, also an der Stelle der geringsten Temperatur. Das heiße Wasser wird im oberen Bereich des Kessels an der Stelle mit der höchsten Temperatur entnommen und wird über das an der Brühgruppe angebrachte, von ihr mit erwärmte Magnetventil über eine Leitung wieder zurück in die Brühgruppe gegeben.

Seit 2008 ist von der Firma Slayer Espresso eine weitere modifizierte Brühgruppe bekannt, die aus einem Vorbrühboiler, der auf ca. 83 °C erhitztes Wasser bereitstellt, und einem nachgeschalteten Brühboiler, der dieses vorerhitzte Wasser auf die gewünschte Endtemperatur erhitzt, besteht. Das Magnetventil sitzt am Vorbrühboiler. Dadurch kann die Verbindungsleitung zwischen Brühboiler und Einlauf in die Dusche entfallen, was den Vorteil hat, dass kein zusätzliches Magnetventil zwischen Vorbrühboiler und Brühboiler notwendig ist, welches dem Heißwasser Wärmeenergie entziehen kann. Die Brühphase wird dabei über ein sogenanntes Schaftventil gesteuert. Zusätzlich ist unmittelbar hinter dem Schaftventil eine ca. 0,7 mm große Düse angeordnet, die für einen sanften Aufbau des Brühdrucks sorgt. Eine herkömmliche Rotationspumpe erhöht den Druck auf ca. 10 bar.

Diese Lösungen des Standes der Technik sind recht aufwändig, insbesondere erfordern sie eine komplexe Steuerungs- und Regelungstechnik hinsichtlich der Temperaturregelung. Zusätzlich werden die verwendeten Brühgruppen durch ein zusätzliches, elektrisches Heizelement auf eine Temperatur über 60 °C erhitzt, was für unerfahrene Anwender ein Sicherheitsrisiko darstellt.

Aufgabe der vorliegenden Erfindung ist die Bereitstellung einer Extraktionsvorrichtung, die die vorliegende Nachteile des Standes der Technik nicht aufweist. Insbesondere soll die vorliegende Erfindung eine mit möglichst wenig Bauteilen herstellbare Extraktionsvorrichtung bereitstellen, die mit einer einfachen Steuerungstechnik betrieben werden kann. Eine weitere Aufgabe der vorliegenden Erfindung ist der Verzicht auf eine Zusatzheizung für die Extraktionsvorrichtung und oder den Extraktionskopf.

Die Aufgabe der vorliegenden Erfindung ist des Weiteren die Bereitstellung eines Verfahrens zur Steuerung einer vorgegebenen Temperatur eines Extraktionsmittels in einer erfindungsgemäßen Extraktionsvorrichtung, das im Vergleich zu den Verfahren des Standes der Technik sich dadurch auszeichnet, dass eine verbesserte Temperaturkonstanz erreicht wird, ohne das zusätzliche Bauteile oder Regelungsmaßnahmen notwendig sind. Darüber hinaus soll das Verfahren mit einer Extraktionsvorrichtung anwendbar sein, die sich durch einen verringerten Bauteileaufwand im Vergleich zu den bisherigen Extraktionsvorrichtungen des Standes der Technik auszeichnet.

Die Aufgabe der vorliegenden Erfindung wird gelöst durch eine Vorrichtung zur Extraktion mittels eines flüssigen Extraktionsmittels, umfassend mindestens eine in hydraulischer Verbindung stehenden Einheit aus einer Pumpe, einem Temperiersystem für das Extraktionsmittel, einem Dreiwegeventil, und einer Extraktionsvorrichtung; wobei die Extraktionsvorrichtung einen Extraktionskopf, ein mit dem Extraktionskopf verbundenes Einlasssieb, ein Auslasssieb, und eine zwischen den beiden Sieben befindliche, zur Aufnahme Extraktionsguts geeignete Extraktionskammer aufweist; und wobei das Dreiwegeventil einen vom Temperiersystem kommenden Einlass, einen in die Extraktionskammer weisenden Auslass, und einen nicht in die Extraktionskammer, von dem Extraktionskopf hinweg weisenden Auslass aufweist; und wobei die Vorrichtung einen zur Messung der Temperatur des in die Extraktionsvorrichtung fließenden Extraktionsmittels geeigneten Temperatursensor aufweist und dass der Extraktionskopf sowohl ganz oder teilweise den Ventilsitz als auch ganz oder teilweise das Ventilgehäuse des Dreiwegeventils bildet.

Unter dem Begriff "Temperiersystem für das Extraktionsmittel" wird hier und im Folgenden eine Vorrichtung verstanden, die das Extraktionsmittel auf eine vorbestimmte Temperatur oder einen vorgegebenen Temperaturverlauf bringt. Solche Temperiersysteme sind an sich bekannt und werden bevorzugterweise aus der Gruppe der Boiler, Thermoblocks oder Wärmetauscher ausgewählt. In einem Boiler wird das für die Extraktion notwendige Extraktionsmittel aufgeheizt. Im Inneren befindet sich ein Heiz Widerstand, der in unmittelbaren Kontakt mit den Extraktionsmittel steht. Die Temperatur des Gebäudes wird üblicherweise über Thermostate oder Pressostate gesteuert. Bei einem Thermoblock handelt es sich um ein Temperiersystem, bei dem - vereinfacht gesagt - ein langes Rohr, durch das das kalte Extraktionsmittel gepumpt wird, in ein Material mit hoher Wärmekapazität und einer Heizvorrichtung eingebracht ist. Auf seinem Weg durch das Rohr wird das Extraktionsmittel entsprechend temperiert. Bei einem Wärmetauscher wird das zu temperierende Extraktionsmittel über eine Wandlung mit einem temperiertem Medium in Kontakt gebracht, was durch geeignete Mittel, beispielsweise durch eine elektrische Heizung, auf die gewünschte Temperatur gebracht wird. Solche Wärmetauscher werden vielfach eingesetzt und werden beispielsweise als Rohr-, Rohrbündel- oder Plattenwärmetauscher besonders bevorzugt.

Unter dem Begriff "Dreiwegeventil" wird hier und im Folgenden ein Ventil mit drei Ein- oder Auslässen verstanden, welches eine umschaltbare Verbindung zwischen je zwei dieser Anschlüsse herstellen kann. Bei den Kaffee- und/oder Espressomaschinen des Standes der Technik findet man Dreiwegeventile bisher nur am oder auf dem Kopf der Brühgruppe, nicht aber in dem Brühkopf an sich angeordnet oder in einer solchen Ausführungsform, dass sie Teil des innenliegenden Brühkopfs einer solchen Maschine sind.

Unter dem Begriff "Ventilsitz" wird hier und im Folgenden das Gegenstück zum Ventil verstanden. Eine Funktionsweise eines häufig bei Extraktionsvorrichtungen anzutreffenden Ventils ist die, dass das gegen den Ventilsitz dichtende Element (Verschlussteil) des Ventils, z.B. eine Membrane, ein Kolben oder ein Kegel, durch eine Spule und einem Magnetkern elektrisch zwangsgesteuert wird.

Unter dem Begriff "Ventilgehäuse" wird hier und im Folgenden der Teil des Ventils verstanden, welcher zur Aufnahme des Verschlussteils als auch des Ventilsitzes dient.

Mit der Formulierung, demnach "der Extraktionskopf sowohl ganz oder teilweise den Ventilsitz als auch ganz oder teilweise das Ventilgehäuse des Dreiwegeventils bildet" wird ausgedrückt, dass der Extraktionskopf sowohl ein- als auch mehrteilig ausgebildet werden kann. Im Falle einer mehrteiligen Ausbildung, wie sie zum Beispiel anhand der erfindungsgemäßen Beispiele mit einer zweiteiligen Ausführungsform erläutert ist, wird der Ventilsitz und oder das Ventilgehäuse von mehreren Bauteilen gebildet, die zusammen den Extraktionskopf darstellen. Der Ventilverschluss kann nur gegen einen Teil des Extraktionskopfs dichten. Es ist aber auch möglich, dass der Ventilverschluss gegen zwei oder mehrere Teile des Extraktionskopfs dichtet: in dem erfindungsgemäßen Ausführungsbeispiel wird gezeigt, wie der Ventilverschluss des Dreiwegeventils gegen zwei Teile des Extraktionskopfs dichtet. Besonders bevorzugt befindet sich der gesamte Ventilverschluss des Dreiwegeventils innerhalb des aus einem oder mehreren Teilen bestehenden Extraktionskopfs, wobei die einzelnen Teile insbesondere durch geeignete Dichtungsmaßnahmen, wie zum Beispiel O-Ringe, miteinander formschlüssig oder kraftschlüssig verbunden sind.

Mit dieser Erfindung ist es erstmals möglich eine Extraktionsvorrichtung bereitzustellen, die mit deutlich weniger Bauteilen als die bisher bekannten Vorrichtung des Standes der Technik auskommen. Die Temperaturkonstanz wird durch an sich bekannte Temperiersysteme bewerkstelligt, ohne dass eine zusätzliche Heizvorrichtung in den Extraktionskopf eingebaut werden muss. Die Steuerung des Dreiwegeventils vom so genannten "Bypassmodus" zum "Extraktionsmodus" wird durch eine einfache Schaltung realisiert, die im folgenden am Beispiel einer elektronischen Schaltung erklärt wird: Ausgangslage ist der Bypassmodus: in diesem Modus ist das Dreiwegeventil so geschaltet, dass der in den Extraktionskopf weisende Einlass mit dem aus dem Extraktionskopf weisenden Auslass hydraulisch in Verbindung steht und die hydraulische Verbindung vom in den Extraktionskopf weisenden Einlass zur Extraktionskammer geschlossen ist. Die Pumpe wird nun eingeschaltet und aus dem Temperiersystem wird nach und nach das heiße Wasser in die Extraktionskammer gefördert. Durch Standzeiten, Leitungsverluste etc. ist die Temperatur des in den Extraktionskopf eingebrachten Wassers anfangs unterhalb der gewünschten Temperatur. Mit fortschreitender Förderung werden aber diese Förder- und Wärmeverluste ausgeglichen und das geförderte Extraktionsmittel hat im Extraktionskopf die eingestellte Temperatur erreicht, die zur Extraktion des Extraktionsguts vorgewählt ist. In diesem Moment wird das Dreiwegeventil so geschaltet, das vom Bypassmodus in den Extraktionsmodus gewechselt wird: beim Extraktionsmodus wird eine hydraulische Verbindung zwischen dem in den Extraktionskopf mündenden Einlass und dem in die Extraktionskammer mündenden Auslass hergestellt und die Verbindung zu dem von dem Extraktionskopf hinweg weisenden Auslass geschlossen. Während des Umschaltens des Dreiwegeventils vom Bypassmodus in den Extraktionsmodus kann die Pumpe für diesen Moment ausgeschaltet werden. Auf diesen Betrieb steht kein Druck im Inneren des gegen beide Auslässe geschlossenen Dreiwegeventils, es entfallen zusätzliche Dichtelemente zwischen dem Einlass und beiden Auslässen des Dreiwegeventils.

Natürlich ist es auch möglich, eine solche Umschaltung nur durch mechanische Komponenten unter Ausnutzung sich thermisch ausdehnender Schaltelemente zu realisieren.

Es ist auch möglich, gemäß einer sehr einfachen Ausführungsform die Temperatur mit einem Federthermometer oder ähnlichem anzuzeigen und das Dreiwegeventil bei Erreichen der gewünschten Temperatur von Hand umzuschalten.

Gemäß einer weiteren, bevorzugten Ausführungsform der vorliegenden Erfindung ist zwischen dem Extraktionskopf und Dreiwegeventil keine abnehmbare hydraulische Verbindung angeordnet. Hierdurch wird der Wärmeverlust der Extraktionsverrichtung nach außen noch einmal verringert. Auch wird der konstruktive Aufwand für eine erfindungsgemäße Extraktionsvorrichtung vereinfacht, was eine Verbesserung des Wartungsaufwandes oder möglicher Fehlerquellen bewirkt. Unter dem Begriff "keine abnehmbare hydraulische Verbindung" wird hier und im Folgenden jedes Bauteil verstanden, welches nicht einstückig mit dem Extraktionskopf und oder dem Dreiwegeventil ausgebildet ist. Folglich fallen hierunter sämtliche abnehmbare oder durch Schweiß- und/oder Lötverbindungen fest angebrachte Leitungen, Verschraubungen, Anschlüsse oder dergleichen.

Entsprechend einer weiteren, ebenfalls bevorzugten erfindungsgemäßen Ausführungsform befindet sich der Temperatursensor im Extraktionskopf. Besonders bevorzugt steht die Oberfläche des Temperatursensors mit dem in den Extraktionskopf einfließenden Extraktionsmittels hydraulisch in Verbindung. Dementsprechend wird erreicht, dass die Temperaturdifferenz zwischen der gemessenen Temperatur und der auf das Extraktionsgut auftreffende Extraktionsmittel so gering wie möglich ist.

Die Auswahl der Temperatursensoren ist unkritisch. Sollte die erfindungsgemäße Extraktionsvorrichtung für dynamische Temperaturverläufe verwendet werden, d.h. unter Verwendung von Temperaturkurven, in denen sich in relativ kurzer Zeit die Temperatur relativ stark verändert, wird die Verwendung von Temperatursensoren empfohlen, die eine möglichst geringe Zeit bei gleichzeitiger Genauigkeit aufweisen. Solche Sensoren sind an sich bekannt. Bevorzugterweise werden Pt1000 Sensoren mit einer Ansprechzeit (t₉₀ = die Zeitdauer, die der Sensor nach einem Temperatursprung benötigt um 90% der Sprungantwort zu erreichen) von weniger als 300 ms verwendet, wie sie beispielsweise in Form von Dünnschichtsensoren im Handel sind.

Es ist auch möglich, einen zusätzlichen Temperatursensor in der Vorrichtung dahingehend anzuordnen, dass dieser direkt mit dem Extraktionsgut mechanisch in Verbindung steht. Hierdurch wird ermöglicht, die Temperatur direkt in der Extraktion zu messen und diesen Meßwertverlauf für die Regelung der Temperatursteuerung des Extraktionsmittels zu nutzen, sofern es sich bei den nächsten Extraktionen ebenfalls um das gleiche Extraktionsgut und die gleiche Extraktionszeit handelt.

Gemäß einer bevorzugten Ausführungsform der vorliegenden Erfindung weist das Dreiwegeventil einen durch Drehung zu betätigenden Stellantrieb auf, durch den der vom Temperiersystem kommende Einlass entweder mit dem zur Brühkammer weisenden Auslass oder mit dem nicht in die Brühkammer weisenden Auslass hydraulisch verbunden ist.

Dementsprechend kann ein - in verschiedene bekannte Extraktionsvorrichtungen des Standes der Technik universell einsetzbarer - Extraktionskopf bereitgestellt werden, der vorhandene Extraktionsköpfe, insbesondere rotationssymmetrische Extraktionsköpfe, ersetzt. Vorzugsweise eignen sich solche Extraktionsköpfe insbesondere für solche Extraktionsvorrichtungen, bei denen der Extraktionskopf das in der Extraktionskammer befindliche Extraktionsgut durch mechanische, elektromechanische, hydraulische oder sonstige geeignete Maßnahmen verdichtet. Ein einfaches Beispiel hierfür sind Kaffeemaschinen mit hydraulisch bewegtem Zylinderbrühkopf.

In einer weiteren, ebenfalls bevorzugten erfindungsgemäßen Ausführungsform ist das Einlasssieb abnehmbar mit dem Extraktionskopf verbunden. Dies hat den besonderen Vorteil, dass mögliche Revisionsarbeiten an dem über dem Einlasssieb befindlichen Dreiwegeventil einfach auszuführen sind.

Bevorzugterweise ist es aber auch möglich, dass entsprechend einer weiteren Ausführungsform der vorliegenden Erfindung dass zwischen dem Einlasssieb und dem zur Extraktionskammer weisenden Auslass ein zusätzliches Wasserverteilungselement angeordnet ist.

Unter dem Begriff "Wasserverteilungselement" wird hier und im Folgenden jede Vorrichtung verstanden, die geeignet ist, eine durch eine Leitung mit einem geringen Querschnitt strömende Flüssigkeit auf eine Leitung mit größeren Querschnitt gleichmäßig zu verteilen. Hierfür eignen sich verschiedene, an sich bekannte Verfahren. Beispielsweise kann im Wege von mechanischen, Miranda förmig verlaufenden Kanälen eine entsprechende Verteilung erzielt werden. Es ist aber auch möglich, Fritten, Kapillaren, Siebe oder sonstige mechanische Elemente zu verwenden, die eine Querschnittserweiterung von kleinem auf großen Querschnitt ermöglichen. Besonders bevorzugt sind entsprechend der vorliegende Erfindung gesinterte Materialien aus wasserlöslichen und/oder inerten, ganz besonders bevorzugt aus biokompatiblen, Materialien wie zum Beispiel Titan, Edelstahl, HDPE, PTFE, Glas etc. oder ein Verteilungselement mit mehreren, in einer Ebene angeordnete Verteilungskanälen.

Eine weitere, ebenfalls besonders bevorzugte Ausführungsform betrifft eine erfindungsgemäße Vorrichtung bei der das Material des Extraktionskopfs eine Wärmeleitfähigkeit von weniger als 0,35 W/(m * K); das Material des Extraktionskopfs einen geringen Reibungskoeffizienten aufweist; und/ oder das Material des Extraktionskopfs ein Material mit einer Haftreibung - bezogen auf das Verschlussteil des Ventils - von weniger als 0,4, insbesondere weniger als 0,05, ist. Ganz besonders bevorzugt ist das Material des Extraktionskopfs PTFE.

Durch geeignete Wahl des Materials des Extraktionskopfs können verschiedene Eigenschaften des Extraktionskopfs maßgeblich beeinflusst werden. Bezogen auf die Wärmeleitfähigkeit bedeutet dies, dass die Temperaturkonstanz des Extraktionsmittels umso besser ist, je geringer die Wärmeleitfähigkeit des Extraktionskopfs ist; das heißt umso weniger findet ein Wärmetransport in die Umgebung statt. Der geringe Reibungskoeffizient des Materials, aus dem der Extraktionskopf hergestellt ist, bzw. die Haftreibung zwischen Extraktionskopf und Ventilverschluss und/oder Ventilsitz hat einen entscheidenden Einfluss auf die benötigte Stellkraft, um das Dreiwegeventil umzuschalten. Wenn das Ventil beispielsweise in Form einer Stellscheibe ausgebildet ist, wie es im Folgenden in den Beispielen gezeigt wird, ist die Auswahl der Materialpaarung mit einer möglichst geringen Haftreibung auch bezüglich der Dichtigkeit zwischen Ventilverschluss und Extraktionskopf von Vorteil. Weisen die beiden gegeneinander schließenden Elemente noch eine geringe Oberflächenrauhigkeit auf, kann auf weitere zusätzliche Dichtungsmaßnahmen verzichtet werden.

Gemäß einer weiteren, bevorzugten Ausführungsform der vorliegenden Erfindung ist das Temperiersystem ein elektrisch betriebener Boiler. Dies ist insbesondere dann von Vorteil, wenn eine einfache Steuerung für die vorliegende Erfindung verwendet werden soll. Es ist nur ein einziger elektronischer Leistungssteller notwendig, der über an sich bekannte Bauteile (Thyristorsteuerung, IGBT), Betriebsarten (Phasenanschnittsteuerung, Impulsgruppenbetrieb oder Impulsgruppenbetrieb mit Phasenanschnittstart) und Regelungstechniken (U²-, I²- oder P-Regelung) die Temperaturkonstanz des aus dem Temperiersystem fließenden Extraktionmittels gewährleistet.

In einer weiteren, ganz besonders bevorzugten erfindungsgemäßen Ausführungsform ist die Pumpe eine Dosierpumpe, insbesondere eine Zahnradpumpe. Gemäß dieser Ausgestaltung wird kein zusätzlicher Sensor (z.B. Durchflussmengensensor) zur Messung der in den Extraktionskopf fließenden Menge an Extraktionsmittel benötigt. Verwendet man darüber hinaus noch eine in der Durchflussmenge regelbare Dosierpumpe oder eine Zahnradpumpe mit variabler Drehzahl (z.B. mit einer Schrittmotorenansteuerung), so kann durch einfache elektronische Maßnahmen der Druck des in dem Extraktionskopfes befindlichen Extraktionsmittels variiert werden. Auf diese Art und Weise können einfach Druckprofile während der Extraktion gefahren werden, eine Technik, die heutzutage immer mehr in professionellen Kaffeemaschinen verwendet wird.

Möchte man neben den zuvor beschriebenen Maßnahmen noch weiter die Genauigkeit der Differenz der Temperatur des Extraktionsmittels zwischen dem Extraktionskopf und dem Temperiersystem minimieren, wird ein zweiter Temperatursensor am Auslass des Extraktionskopfs verwendet. Dadurch kann im Bypassmodus auch die Differenz zwischen dem ersten Temperatursensor, d.h. dem stromaufwärts befindlichen Temperatursensor, und dem am Auslass des Extraktionskopfs befindlichen Temperatursensors bestimmt werden. Erst nach Unterschreiten einer vorgegebenen Differenz dieser beiden Temperatursensoren wird dann das Dreiwegeventil vom Bypassbetrieb in den Extraktionsbetrieb geschaltet.

Die vorliegende Erfindung betrifft darüber hinaus die Verwendung der zuvor beschriebenen Vorrichtung in einer Kaffeemaschine. Hierdurch wird erstmals eine bisher nicht dagewesene Vereinfachung im Aufbau einer professionellen Kaffeemaschine erreicht, wobei die Temperaturkonstanz des auf das Kaffeemehl gebrachten Brühwassers in vielen Fällen verbessert ist, als bei den viel aufwändiger hergestellten Maschinen des Standes der Technik. Durch die verringerte Anzahl an Bauteilen und durch die Möglichkeit, eine ganz einfache, bewährte Regelungstechnik für das Temperiersystem einzusetzen, wird die Störanfälligkeit bei der erfindungsgemäßen Verwendung erheblich verringert.

Ganz besonders bevorzugt wird die erfindungsgemäße Extraktionsvorrichtung in einem Siebträger verwendet, bei dem der Extraktionskopf in einer Vorrichtung zur Aufnahme eines Siebträgers angeordnet ist und mittels einer Dichtung gegen das Sieb des Siebträgers abdichtet.

Extraktionsvorrichtung in einem Kaffeevollautomaten verwendet, bei dem der Brühzylinder in einer Brühkammer zur Aufnahme des Kaffeemehls angeordnet ist.

Die vorliegende Erfindung betrifft des Weiteren ein Verfahren zur Steuerung einer vorgegebenen Temperatur eine Extraktionsmittels in einer Extraktionsvorrichtung mit einer der zuvor beschriebenen, erfindungsgemäßen Vorrichtung durch folgende Schritte: Im Ausgangszustand ist der vom Temperiersystem kommende, in den Extraktionskopf mündende Einlass mit dem nicht in die Brühkammer weisenden Auslass hydraulisch verbunden. Mittels der Pumpe wird das Extraktionsmittel über den vom Temperiersystem kommenden Einlass durch den Extraktionskopf zu dem nicht in die Extraktionskammer weisenden Auslass gefördert. Während der Förderung des Extraktionsmittels wird mit dem im Extraktionskopf befindlichen Temperatursensor die Differenz zwischen gewünschter Temperatur und Isttemperatur des Extraktionsmittels gemessen. Nach Unterschreiten einer vorgegebenen Differenz zwischen gewünschter Temperatur und Isttemperatur des Extraktionsmittels wird das Dreiwegeventil so geschaltet, dass der nicht in die Extraktionskammer weisende und aus dem Extraktionskopf mündende Auslass geschlossen und der in die Extraktionskammer weisende Auslass geöffnet wird. Für die Dauer des Extraktionsvorgangs wird das Extraktionsmittel in die das Extraktionsgut aufweisende Extraktionskammer gefördert. Am Schluss des Extraktionsvorgangs wird entweder die Pumpe abgeschaltet und/oder das Dreiwegeventil so geschaltet, dass der in die Extraktionskammer weisende Auslass geschlossen und der nicht in die Extraktionskammer weisende und aus dem Extraktionskopf mündende Auslass geöffnet wird.

Die folgenden Beispiele dienen der Erläuterung der vorliegenden Erfindung anhand eines Siebträgers (Espressomaschine), ohne diese in irgendeiner Form zu beschränken.
Figur I zeigt einen Schnitt durch einen Brühkopf eines Siegträgers, bei dem der Extraktionskopf zweiteilig ausgebildet und durch Schrauben mit der Grundplatte verbunden ist. In den oberen Teil des Extraktionskopfs sind zwei Schlauchanschlüsse eingearbeitet, der linke Einlass ist der Einlass für das Extraktionsmedium (Brühwasser), welches aus dem Temperiersystem kommend mittels einer Pumpe in die Extraktionskammer gegeben wird. Der obere und untere Teil des Extraktionskopfs sind durch zwei O-Ringe abgedichtet. Die Extraktionskammer ist in diesem Fall die Brühkammer, die sich in der Siebpfanne befindet. Zwischen dem oberen Teil des Extraktionskopfs und dem unteren Teil ist das Dreiwegeventil angeordnet. Der Ventilverschluss ist hierbei ein Drehschieber, der beweglich angeordnet und über eine Umschaltwelle mit einem Motor befestigt ist. Diese Figur bezieht sich auf den Brühmodus, d.h. das Ventil ist so angeordnet, dass eine hydraulische Verbindung zwischen dem vom Temperiersystem gespeisten Einlass im oberen Teil des Extraktionskopfs und der in die Brühkammer weisenden Auslass im unteren Teil des Extraktionskopfs besteht. Die Verbindung zwischen dem Einlass und dem in die Brühkammer weisenden Auslass ist durch eine Bohrung in dem Drehschieber realisiert, die in etwa den gleichen Durchmesser wie der Einlass und der die Brühkammer weisende Auslass hat. Eine hydraulische Verbindung zwischen dem Einlass und dem vom oberen Extraktionskopf hinweg weisenden Auslass besteht nicht. In den Kanal zwischen dem vom Temperiersystem gespeisten Einlass am oberen Teil des Extraktionskopfs und dem als Drehschieber ausgebildeten Ventilverschluss ragt die Spitze des Temperatursensors, der über zwei O-Ringe dicht in den Extraktionskopf (in oberen und unteren Teil) eingearbeitet ist.
Figur II zeigt einen Schnitt durch den Brühkopf des Siebträgers im Bypassmodus. Deutlich zu sehen ist, dass der als Drehschieber (2) ausgebildete Ventilverschluss derart angeordnet ist, dass zwischen dem Einlass (1) und dem in die Brühkammer weisenden Auslass (3) keine hydraulische Verbindung existiert. Die in Figur I dargestellte zylindrische Bohrung in dem Drehschieber (2), die zuvor den Einlass mit der Brühkammer hydraulisch verbunden hat, ist durch Rotation in eine solche Position gebracht worden, dass sie weder mit dem Einlass noch mit dem in die Brühkammer weisenden Auslass hydraulisch verbunden ist. Desweiteren ist der vom Temperiersystem gespeiste Einlass mit dem rechts von der Umschaltwelle angeordneten, von dem oberen Teil des Extraktionskopfes hinweg weisenden Auslass hydraulisch durch eine radial verlaufende Nut in den Drehschieber (2) verbunden, wie es perspektivisch in Figur IV besser zu sehen ist.
Figur III zeigt einen Schnitt in perspektivischer Darstellung im Extraktionsmodus. Deutlich zu sehen ist die Anordnung des Drehschiebers (2), wobei die zylindrische Bohrung (4) in dem Drehschieber (2) den Einlasskanal mit dem in die Brühkammer weisenden Auslass (3) hydraulisch verbindet und der von dem oberen Teil des Extraktionskopfes weisende Auslass hydraulisch vom Einlass gesperrt ist.
Figur IV zeigt einen Schnitt in perspektivischer Darstellung im Bypassmodus. Hier ist erkennbar, wie die in dem Drehschieber (2) verlaufende Nut die hydraulische Verbindung von der Einlassposition (6) zur Auslassposition (6) herstellt, sodass das in den Einlass des oberen Teils des Extraktionskopfes strömende Brühwasser aus dem Auslass des oberen Teils des Extraktionskopfes abfließt. Der Drehschieber (2) ist von Figur III ausgehend durch eine Linksrotation in die in Figur IV dargestellte Position gebracht worden.
Figur V zeigt eine perspektivische Darstellung des zuvor beschriebenen Brühkopfes.

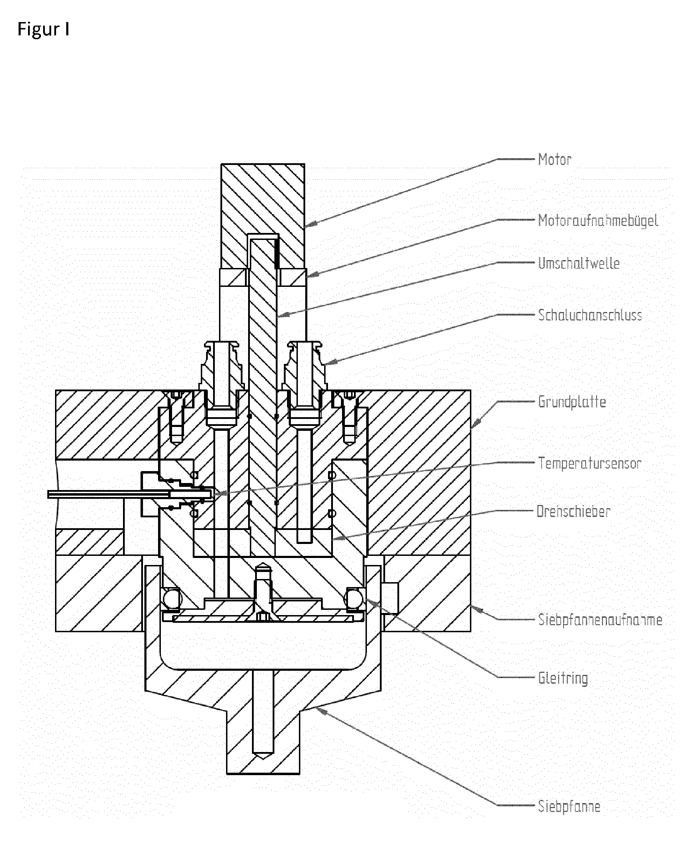

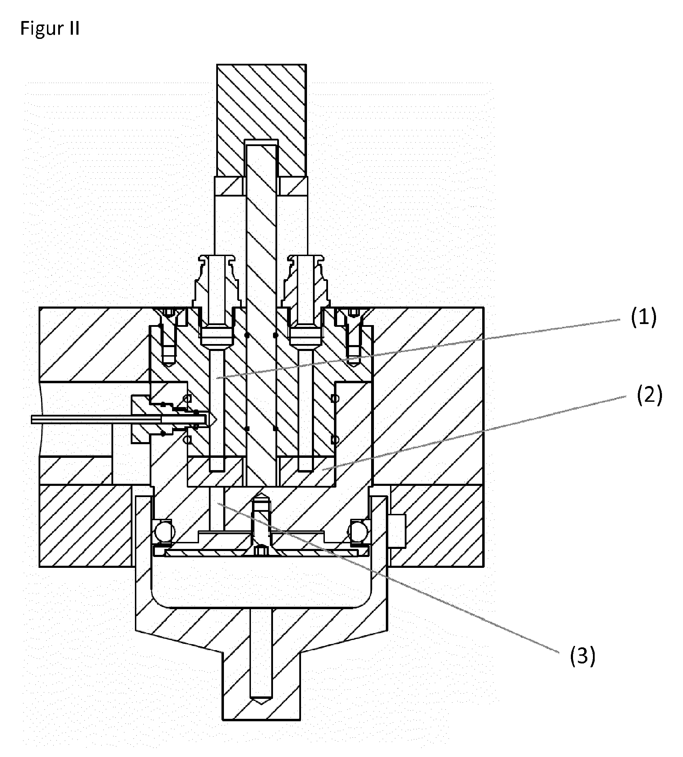

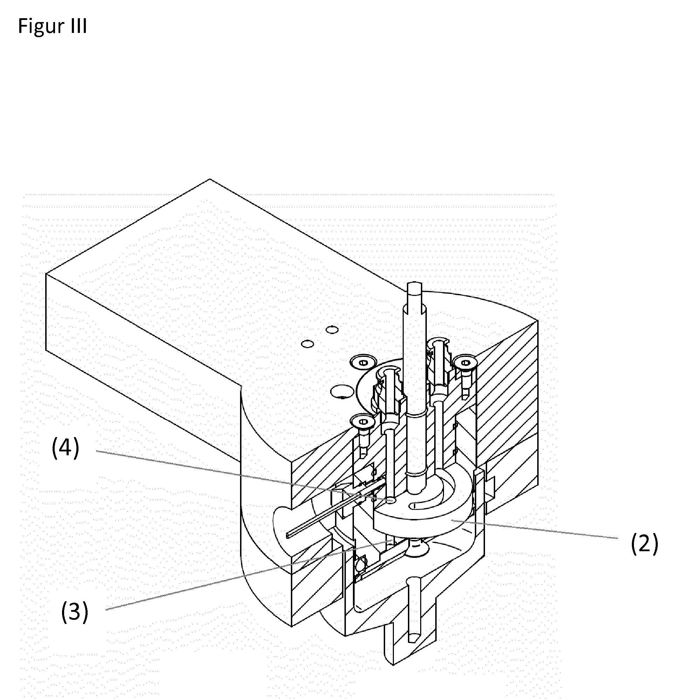

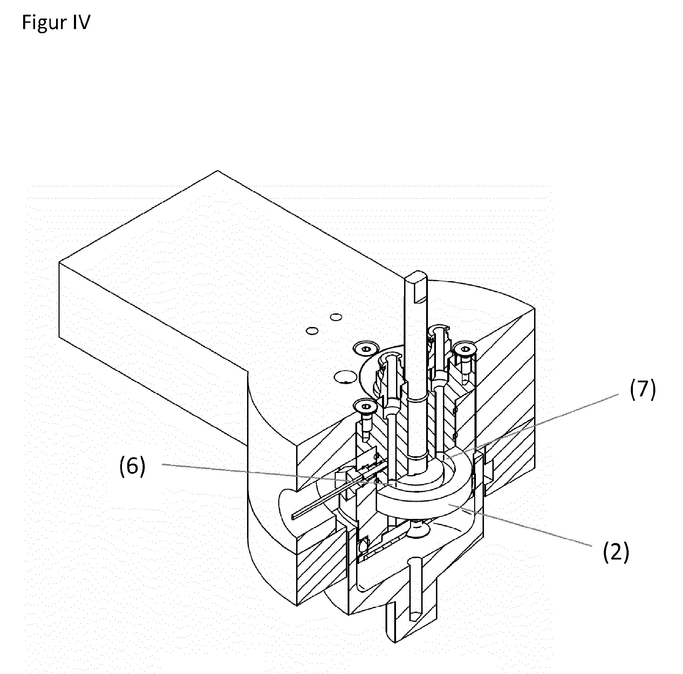

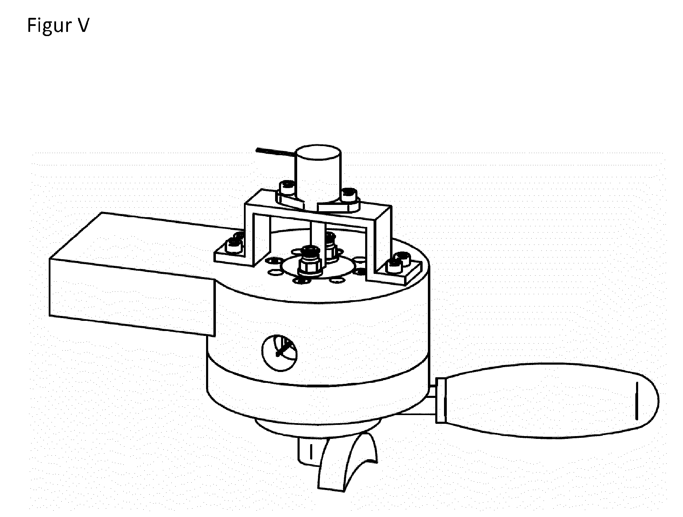

## Patentansprüche

1. Vorrichtung zur Extraktion mit einem flüssigen Extraktionsmittels, umfassend mindestens eine in hydraulischer Verbindung stehenden Einheit aus
i. einer Pumpe,
ii. einem Temperiersystem für das Extraktionsmittel,
iii. einem Dreiwegeventil, und
iv. einer Extraktionsvorrichtung;
wobei die Extraktionsvorrichtung
a. einen Extraktionskopf,
b. ein mit dem Extraktionskopf verbundenes Einlasssieb,
c. ein Auslasssieb, und
d. eine zwischen den beiden Sieben befindliche, zur Aufnahme Extraktionsguts geeignete Extraktionskammer
aufweist; und wobei das Dreiwegeventil
(1) einen vom Temperiersystem kommenden Einlass,
(2) einen in die Extraktionskammer weisenden Auslass, und
(3) einen nicht in die Extraktionskammer, von dem Extraktionskopf hinweg weisenden Auslass
aufweist, **dadurch gekennzeichnet, dass** die Vorrichtung einen zur Messung der Temperatur des in die Extraktionsvorrichtung fließenden Extraktionsmittels geeigneten Temperatursensor aufweist und dass der Extraktionskopf sowohl ganz oder teilweise den Ventilsitz als auch ganz oder teilweise das Ventilgehäuse des Dreiwegeventils bildet.

2. Vorrichtung nach Anspruch 1, **dadurch gekennzeichnet, dass** zwischen Extraktionskopf und Dreiwegeventil keine abnehmbare hydraulische Verbindung angeordnet ist.

3. Vorrichtung nach Anspruch 1 oder 2, **dadurch gekennzeichnet, dass** der Temperatursensor im Extraktionskopf angeordnet ist.

4. Vorrichtung nach einem der vorhergehenden Ansprüche, **dadurch gekennzeichnet, dass** das Dreiwegeventil einen durch Drehung zu betätigenden Stellantrieb aufweist, durch den der vom Temperiersystem kommende Einlass entweder mit dem zur Brühkammer weisenden Auslass oder mit dem nicht in die Brühkammer weisenden Auslass hydraulisch verbunden ist.

5. Vorrichtung nach einem der vorhergehenden Ansprüche, **dadurch gekennzeichnet, dass** das Einlasssieb abnehmbar mit dem Extraktionskopf verbunden ist.

6. Vorrichtung nach einem der vorhergehenden Ansprüche, **dadurch gekennzeichnet, dass** zwischen dem Einlasssieb und dem zur Extraktionskammer weisenden Auslass ein zusätzliches Wasserverteilungselement angeordnet ist.

7. Vorrichtung nach Anspruch 6, **dadurch gekennzeichnet, dass** das Wasserverteilungselement eine Fritte oder ein Sieb aus einem nicht wasserlöslichen Material oder ein Element mit mehreren, in einer Ebene angeordneten Verteilungskanälen, ist.

8. Vorrichtung nach einem der vorhergehenden Ansprüche, **dadurch gekennzeichnet, dass** das Material des Extraktionskopfs
a. eine Wärmeleitfähigkeit von weniger als 0,35 W/(m * K) aufweist;
b. einen geringen Reibungskoeffizienten aufweist; und/oder
c. ein Material mit einer Haftreibung - bezogen auf das Verschlussteil des Ventils - von weniger als 0,4, insbesondere weniger als 0,05, ist.

9. Vorrichtung nach einem der vorhergehenden Ansprüche, **dadurch gekennzeichnet, dass** Material des Extraktionskopfs PTFE ist.

10. Vorrichtung nach einem der vorhergehenden Ansprüche, **dadurch gekennzeichnet, dass** die Pumpe eine Dosierpumpe, insbesondere eine Zahnradpumpe ist.

11. Vorrichtung nach einem der vorhergehenden Ansprüche, **dadurch gekennzeichnet, dass** am vom Extraktionskopf hinweg weisenden Auslass ein zusätzlicher Temperatursensor angebracht ist.

12. Verwendung einer Vorrichtung nach einem der vorhergehenden Ansprüche zur Verwendung in einer Kaffeemaschine.

13. Verwendung nach Anspruch 12 in einem Siebträger, bei dem der Extraktionskopf in einer Vorrichtung zur Aufnahme eines Siebträgers angeordnet ist und mittels einer Dichtung gegen das Sieb des Siebträgers abdichtet.

14. Verwendung nach Anspruch 12 in einem Kaffeevollautomaten, bei dem der Brühzylinder in einer Brühkammer zur Aufnahme des Kaffeemehls angeordnet ist.

15. Verfahren zur Steuerung einer vorgegebenen Wasserbrühtemperatur im Brühzylinder einer Extraktionsvorrichtung mit einer Vorrichtung nach einem der Ansprüche 1 bis 12, **dadurch gekennzeichnet dass**
a. der vom Temperiersystem kommende, in den Extraktionskopf mündende Einlass mit dem nicht in die Brühkammer weisenden Auslass hydraulisch verbunden ist;
b. die Pumpe fördert das Extraktionsmittel aus dem Temperiersystem über den im Extraktionskopf befindlichen Einlass durch den Extraktionskopf zu dem nicht in die Extraktionskammer weisenden und vom Extraktionskopf hinweg weisenden Auslass;
c. während der Förderung des Extraktionsmittels mit dem im Extraktionskopf angeordneten Temperatursensor die Differenz zwischen gewünschter Temperatur und Isttemperatur des Extraktionsmittels gemessen wird;
d. nach Unterschreiten einer vorgegebenen Differenz zwischen gewünschter Temperatur und Isttemperatur des Extraktionsmittels das Dreiwegeventil so geschaltet wird, dass der nicht in die Extraktionskammer weisende und aus dem Extraktionskopf mündende Auslass geschlossen und der in die Extraktionskammer weisende Auslass des Dreiwegeventils geöffnet wird;
e. für die Dauer des Extraktionsvorgangs das Extraktionsmittel in die das Extraktionsgut aufweisende Extraktionskammer gefördert wird;
f. am Schluss des Extraktionsvorgangs entweder die Pumpe abgeschaltet und/oder das Dreiwegeventil so geschaltet wird, dass der in die Extraktionskammer weisende Auslass geschlossen und der nicht in die Extraktionskammer weisende und aus dem Extraktionskopf mündende Auslass geöffnet wird.
